# EUROPÄISCHE PATENTSCHRIFT

(11) **EP 3 468 903 B1**
(45) Veröffentlichungstag und Bekanntmachung des Hinweises auf die Patenterteilung: **23.09.2020**
(21) Anmeldenummer: 18743399.0
(22) Anmeldetag: 25.06.2018
(51) Int. Cl.: B65G 43/02, B65G 47/86, B67C 7/00

(54) **BEHÄLTERBEHANDLUNGSANLAGE UND VERFAHREN ZUR ERFASSUNG VON LAUFEIGENSCHAFTEN EINER ROLLE AN EINER HUBKURVE EINER SOLCHEN BEHÄLTERBEHANDLUNGSANLAGE**
CONTAINER-HANDLING INSTALLATION AND METHOD FOR DETECTING RUNNING CHARACTERISTICS OF A ROLLER ON A LIFT CURVE OF SUCH A CONTAINER-HANDLING INSTALLATION
INSTALLATION DE TRAITEMENT DE RÉCIPIENT ET PROCÉDÉ DE DÉTECTION DE PROPRIÉTÉS DE ROULEMENT D'UN ROULEAU SUR UNE CAME DE LEVAGE D'UNE TELLE INSTALLATION DE TRAITEMENT DE RÉCIPIENT

(30) Priorität: 04.09.2017 DE 102017120295
(43) Veröffentlichungstag der Anmeldung: 17.04.2019
(73) Patentinhaber: KRONES AG, 93073 Neutraubling (DE)
(72) Erfinder: KURSAWE, Andreas, 93073 Neutraubling (DE); STRAUSS,Johannes, 93073 Neutraubling (DE)
(74) Vertreter: Schuhbießer, Irmgard Gertrud
(86) Internationale Anmeldenummer: PCT/EP2018/067000
(87) Internationale Veröffentlichungsnummer: WO 2019/042621

(56) Entgegenhaltungen:
- EP-A1- 2 913 066
- EP-A2- 2 108 928
- CN-U- 201 678 430
- DE-U1- 29 621 799
- JP-A- H10 300 426
- JP-A- 2008 039 708
- US-A1- 2012 186 613
- US-B1- 7 213 789

## Beschreibung

Die vorliegende Erfindung bezieht sich auf eine Behälterbehandlungsanlage und ein Verfahren zur Erfassung von Laufeigenschaften einer Rolle an einer Hubkurve einer solchen Behälterbehandlungsanlage.

DE 296 21 799 U1 zeigt eine Vorrichtung zum Abschrauben von Verschlusskappen von Gefäßen nach dem Oberbegriff des Anspruchs 1. Die Vorrichtung hat eine Hubkurve zum Verstellen mindestens eines Behandlungselements zum Behandeln des Gefäßes und/oder des mindestens einen Gefäßes relativ zueinander.

Zum Behandeln von Behältern, wie Flaschen, Dosen, usw. kommen Behälterbehandlungsanlagen zum Einsatz, um die Behälter in Bezug auf eine Aufnahme eines Produkts, wie beispielsweise eines Getränks, eines Reinigungsmittels, eines Kosmetikprodukts, eines Stückguts, wie ein Tuch, Stäben, usw. vorzubereiten. Zusätzlich oder alternativ sind Behälterbehandlungsanlagen ausgestaltet, die Behälter in Verpackungseinheiten zu verpacken. Hierfür wird bei der Behälterbehandlungsanlage mindestens eine Behälterbehandlungsmaschine, wie insbesondere eine Füllmaschine, eine Etikettiermaschine, eine Verpackungsmaschine, usw. verwendet.

Bei einer Behandlung der Behälter mit der jeweiligen Behälterbehandlungsmaschine sind beispielsweise Halterungen oder Behandlungselemente für die Behälter in der Höhe bzw. vertikal zu verstellen. Hierfür wird eine Hubkurve eingesetzt, auf welcher die Halterungen oder Behandlungselemente auf Rollen nach oben oder nach unten laufen. Mit einer Hubkurve ist insbesondere ein Höhenausgleich von Verpackungen mit unterschiedlicher Höhe, ein Einspannen von Verpackungen oder Behältern zur Arretierung, ein Abdichten von Behälteröffnungen zur Druckbeaufschlagung, eine Ansteuerung von Kinematik, usw. realisierbar. Beispielsweise können bei einer Füllmaschine oder einer Etikettiermaschine oder einer Verpackungsmaschine, usw. die Rollen einer Vielzahl von Hubelementen auf einer Hubkurve abrollen, die entlang des Umfangs eines Maschinentischs angeordnet ist.

Die Rollen unterliegen einem Verschleiß, der von vielen Parametern abhängig ist, wie beispielsweise Produktionsgeschwindigkeit, Umgebungstemperatur, Reinigungsmedien, Schmiermittel, usw. Dadurch ist der Verschleiß der Rollen je nach Anwendung und Betriebssituation sehr unterschiedlich.

Da der Verschleißzustand der Rollen aus den genannten Gründen nicht sicher vorausgesagt werden kann, müssen an der Behälterbehandlungsmaschine die Rollen nach vorbestimmten festen Wartungsintervallen überprüft und/oder präventiv ausgetauscht werden. Bei der Festlegung der Wartungsintervalle ist sicherzustellen, dass die Maschine je nach Bedarf und mit der gewünschten Produktionsqualität verfügbar ist, ohne dass ungewollte Maschinen- und dadurch Anlagenstillstände verursacht werden. Daher sind die festen Wartungsintervalle auf den Fall ausgelegt, bei welchem der Erfahrung nach eine Rolle am frühesten ausgetauscht werden muss. Andernfalls riskiert der Betreiber der Behälterbehandlungsmaschine, dass bei der Produktion Qualitätsmängel oder ungeplante Produktionsstillstände auftreten.

Dadurch werden jedoch viele Rollen bereits ausgetauscht, wenn die Rollen eigentlich noch ohne Probleme verwendbar wären. Dies ist in Hinblick auf die Betriebskosten der Anlage und in Hinblick auf den schonenden Umgang mit Ressourcen nachteilig.

Daher ist es Aufgabe der vorliegenden Erfindung, eine Behälterbehandlungsanlage und ein Verfahren zur Erfassung von Laufeigenschaften einer Rolle an einer Hubkurve einer solchen Behälterbehandlungsanlage bereitzustellen, mit welchen die zuvor genannten Probleme gelöst werden können. Insbesondere sollen eine Behälterbehandlungsanlage und ein Verfahren zur Erfassung von Laufeigenschaften einer Rolle an einer Hubkurve einer solchen Behälterbehandlungsanlage bereitgestellt werden, die für die Rollen eine Wartung und einen Austausch gemäß dem tatsächlichen Verschleiß oder Bedarf ermöglichen.

Diese Aufgabe wird durch eine Behälterbehandlungsanlage nach Anspruch 1 gelöst. Die Behälterbehandlungsanlage hat mindestens ein Behandlungselement zum Behandeln mindestens eines Behälters, eine Hubkurve zum Verstellen des mindestens einen Behandlungselements und/oder des mindestens eines Behälters relativ zueinander, und einer Erfassungseinrichtung zur selektiven Erfassung der Laufeigenschaften einer einzelnen Rolle an der Hubkurve, wie in Anspruch 1 beschrieben.

Die beschriebene Behälterbehandlungsanlage ermöglicht eine sichere Erkennung auch von bereits kleinen Fehlern an den einzelnen Rollen bzw. deren Wälzkörper und somit des Verschleißzustandes jeder einzelnen Rolle an einer Hubkurve. Damit ist die Erkennung für jede Rolle selektiv möglich. Infolgedessen ist eine selektive und kostenoptimierte Wartung der Behälterbehandlungsmaschine durchführbar. Die Wartung kann somit vorbeugend mit ausreichend Vorlauf geplant werden.

Mit der Behälterbehandlungsanlage sind dadurch Qualitätsmängel aufgrund von fehlerhaften bzw. verschlissenen Rollen sehr sicher vermeidbar. Im Ergebnis können dadurch auch ungeplante Anlagenstillstände sowie Produktionsausfälle und Ausschuss aufgrund von Rollenverschleiß minimiert werden.

Noch dazu ist das Erfassungssignal der Erfassungseinrichtung durch den Aufbau der Erfassungseinrichtung sehr unempfindlich gegenüber äußeren Störungen, welche das Erfassungssignal verfälschen. Solche Störungen können beispielsweise Schwingungen in der Maschinenstruktur sein, wie dem Maschinengestell, einer Halterung, einer Lagerung, usw., die durch den Betrieb der Maschine hervorgerufen werden, oder vorbeifahrende Fahrzeuge, usw.

Die Erfassungseinrichtung stellt durch ihren Aufbau sicher, dass die Amplitude des Erfassungssignals in einem vorbestimmten Erfassungsbereich sehr stark dominiert. Zudem gewährleistet der Aufbau der Erfassungseinrichtung, dass auch kleine Fehler am Wälzkörper der Rollen zu einem erfassbaren Signal führen. Dadurch ist die Auswertung des Erfassungssignals relativ einfach, so dass eine verschlissene Rolle sicher erkennbar ist. Vorteilhaft sind aufgrund dessen der Aufwand und die Kosten in Bezug auf die benötigte Hardware und Software für die Erfassungseinrichtung gering. Noch dazu ist die Struktur in der Hubkurve für die Erfassungseinrichtung kostengünstig in auch bereits vorhandene Hubkurven einbringbar, insbesondere durch Fräsen.

Vorteilhafte weitere Ausgestaltungen der Behälterbehandlungsanlage sind in den abhängigen Ansprüchen angegeben.

In einer Ausführungsvariante ist die Erfassungseinrichtung an der Hubkurve derart angeordnet ist, dass die Erfassungseinrichtung die Laufeigenschaften für jede einzelne Rolle selektiv erfasst, die an der Hubkurve läuft.

In einer speziellen Ausgestaltung weist die Hubkurve einen ersten Hubkurvenbereich und einen zweiten Hubkurvenbereich auf, die schwingungsmäßig voneinander entkoppelt sind, wobei ein Sensor der Erfassungseinrichtung in dem zweiten Hubkurvenbereich angeordnet ist.

Die zuvor beschriebene Erfassungseinrichtung weist eine Erfassungsstrecke auf, die einen ersten Hubkurvenbereich und einen zweiten Hubkurvenbereich miteinander koppelt, in welchem ein Sensor der Erfassungseinrichtung zur Erfassung von Schwingungen angeordnet ist, die von einer Rolle in der Erfassungsstrecke injiziert werden. Hierbei sind der erste Hubkurvenbereich und der zweite Hubkurvenbereich mit Ausnahme der Erfassungsstrecke durch eine Aussparung voneinander entkoppelt.

Zudem kann die Erfassungsstrecke derart ausgestaltet sein, dass der zweite Hubkurvenbereich in einer vorbestimmten Erfassungsrichtung relativ zu dem ersten Hubkurvenbereich schwingt, wenn auf der Erfassungsstrecke eine Rolle abrollt, und wobei die Erfassungsstrecke gegenüber Schwingungen unempfindlich ist, die in einen übrigen Rollweg der Hubkurve injiziert werden.

Die Erfassungsstrecke hat möglicherweise eine Länge, die mindestens einem Außenumfang eines Wälzkörpers der Rolle entspricht, die auf der Erfassungsstrecke abrollt. Hierbei ist die vorbestimmte Erfassungsrichtung in etwa senkrecht zu einer Ebene angeordnet, in welcher die Rollen an der Erfassungsstrecke abrollen. Alternativ oder zusätzlich ist die Ausdehnung des zweiten Hubkurvenbereichs in der Richtung der Länge der Erfassungsstrecke größer als die Länge der Erfassungsstrecke.

In einer Ausgestaltung weist die Erfassungseinrichtung als Sensor einen Beschleunigungssensor auf, der zum Erfassen von Beschleunigungsamplituden ausgestaltet ist.

Denkbar ist, dass die Erfassungseinrichtung zudem ein Auswertemodul aufweist, das ausgestaltet ist, die Erfassungsergebnisse des Sensors unter Berücksichtigung einer Ausgabe eines Drehgebers auszuwerten, um die Erfassungsergebnisse des Sensors den einzelnen Rollen an der Hubkurve zuzuordnen.

Die Behälterbehandlungsmaschine kann eine Streckblasmaschine und/oder eine Füllmaschine und/oder ein Verschließer und/oder eine Ausstattungsmaschine und/oder eine Verpackungsmaschine sein oder aufweisen.

Die zuvor genannte Aufgabe wird zudem durch ein Verfahren zur Erfassung von Laufeigenschaften einer Rolle an einer Hubkurve einer solchen Behälterbehandlungsanlage nach Anspruch 11 gelöst. Das Verfahren hat die Schritte: Verstellen, mit einer Hubkurve, mindestens eines Behandlungselement und/oder des mindestens eines Behälters relativ zueinander, um in der Behälterbehandlungsanlage mindestens einen Behälter mit dem mindestens einen Behandlungselement zu behandeln, und selektiv Erfassen, mit einer Erfassungseinrichtung, der Laufeigenschaften einer einzelnen Rolle an der Hubkurve, wie in Anspruch 11 beschrieben.

Das Verfahren erzielt dieselben Vorteile, wie zuvor in Bezug auf die Anlage beschrieben.

Weitere mögliche Implementierungen der Erfindung umfassen auch nicht explizit genannte Kombinationen von zuvor oder im Folgenden bezüglich von Ausführungsbeispielen beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine stark vereinfachte Draufsicht auf eine Behälterbehandlungsanlage gemäß einem Ausführungsbeispiel;
Fig. 2 eine Seitenansicht einer sehr schematisch dargestellten Halterung für Behälter an einer Hubkurve mit einer Erfassungseinrichtung der Behälterbehandlungsanlage gemäß dem Ausführungsbeispiel;
Fig. 3 eine Draufsicht auf die sehr schematisch dargestellte Halterung für Behälter an der Hubkurve der Behälterbehandlungsanlage gemäß dem Ausführungsbeispiel;
Fig. 4 eine vereinfachte Teildraufsicht auf die Hubkurve mit der Erfassungseinrichtung der Behälterbehandlungsanlage gemäß dem Ausführungsbeispiel;
Fig. 5 eine weitere vereinfachte Teildraufsicht auf die Hubkurve mit der Erfassungseinrichtung der Behälterbehandlungsanlage gemäß dem Ausführungsbeispiel;
Fig. 6 eine Darstellung der Empfindlichkeit einer Erfassungsstrecke der Erfassungseinrichtung gemäß dem Ausführungsbeispiel für verschiedenen Frequenzen;
Fig. 7 ein schematisches Bockschaltbild der Erfassungseinrichtung gemäß dem Ausführungsbeispiel;
Fig. 8 bis Fig. 10 jeweils ein Frequenzspektrum von Erfassungsergebnissen an verschiedenen Stellen der Erfassungsstrecke der Erfassungseinrichtung gemäß dem Ausführungsbeispiel;
Fig. 11 eine weitere vereinfachte Teildraufsicht auf die Hubkurve mit der Erfassungseinrichtung der Behälterbehandlungsanlage gemäß dem Ausführungsbeispiel; und
Fig. 12 und Fig. 13 jeweils ein Auswertediagramm der Erfassungseinrichtung der Behälterbehandlungsanlage gemäß dem Ausführungsbeispiel.

In den Figuren sind gleiche oder funktionsgleiche Elemente, sofern nichts anderes angegeben ist, mit denselben Bezugszeichen versehen.

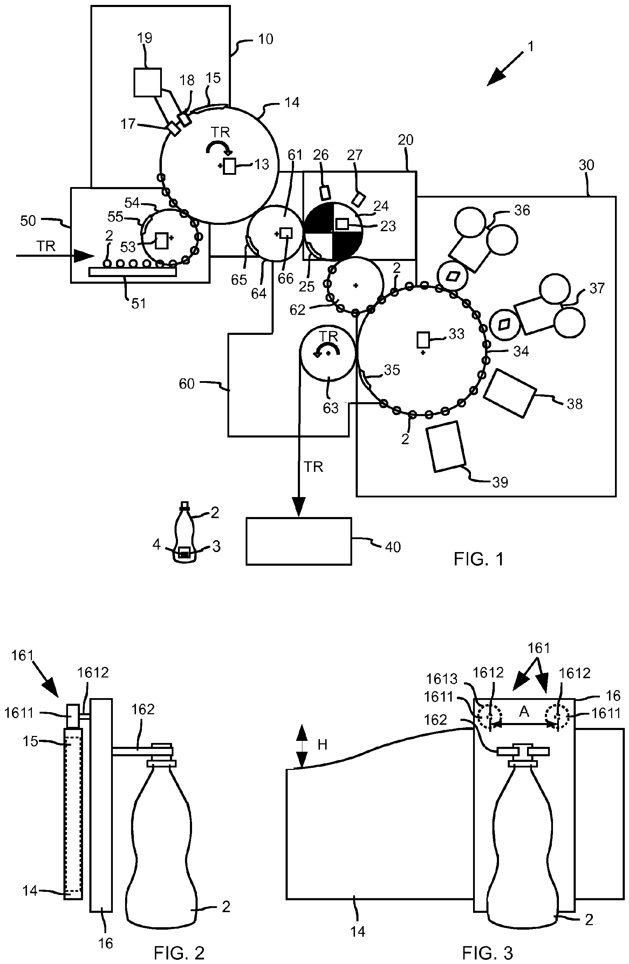

Fig. 1 zeigt eine Behälterbehandlungsanlage 1 zur Behandlung von Behältern 2, die Flaschen, Dosen, Kästen, usw. sein können, die mit einem sehr schematisch dargestellten Etikett 3 und/oder einer beliebigen Bedruckung 4 als Kennzeichnung ausstattbar sind.

Hierfür weist die Behälterbehandlungsanlage 1 als ein Beispiel eine erste bis vierte Behälterbehandlungsmaschine 10, 20, 30, 40 auf, die miteinander gekoppelt sind. Die Behälterbehandlungsanlage 1 kann jedoch auch nur eine oder zwei oder drei der Behälterbehandlungsmaschinen 10, 20, 30, 40 aufweisen. Es können auch mehr Behälterbehandlungsmaschinen 10, 20, 30, 40 vorhanden sein. Demzufolge ist jede beliebige Zahl von Behälterbehandlungsmaschinen 10, 20, 30, 40 möglich. In Fig. 1 sind der Einfachheit halber nicht alle Behälter 2 dargestellt oder mit einem Bezugszeichen versehen.

Ein Behälter 2 kann beispielsweise ein Behälter sein, der ein Fassungsvermögen von maximal ca. 0,33 Liter oder 0,5 Liter oder 1,5 Liter usw. hat. Selbstverständlich sind auch andere Fassungsvermögen denkbar. Hierbei kann die Form des Behälters 2 frei gewählt werden. Außerdem kann das Material des Behälters 2 frei gewählt werden, wie beispielsweise Glas, Kunststoff, Aluminium, etc.

Im Zulauf der ersten Behälterbehandlungsmaschine 10 ist eine Transporteinrichtung 50 vorgesehen, welche mit Hilfe einer Transportschiene 51 und einer Hubkurve 54 der ersten Behälterbehandlungsmaschine 10 Behälter 2 aufgereiht in einer Reihe oder als Behälterstrom zuführt. Die Hubkurve 54 bildet eine Rundläufertransporteinrichtung, die zudem einen Drehgeber 53 aufweist. Die Hubkurve 54 ist außerdem mit einer Erfassungseinrichtung 55 versehen. Die erste Behälterbehandlungsmaschine 10 ist als Rundläufermaschine mit Hubkurve 14 ausgeführt, bei der eine Erfassungseinrichtung 15 vorgesehen ist.

Zudem hat die zweite Behälterbehandlungsmaschine 20 bei dem Beispiel von Fig. 1 einen Drehgeber 23 und eine Hubkurve 24 mit einer Erfassungseinrichtung 25. Außerdem hat die dritte Behälterbehandlungsmaschine 20 bei dem Beispiel von Fig. 1 einen Drehgeber 33 und eine Hubkurve 34 mit einer Erfassungseinrichtung 35.

Die Transportrichtung TR der Behälter 2 ist in Fig. 1 jeweils durch Pfeile angegeben und ergibt sich auch aus der Reihe von Behältern 2 entlang der Behälterbehandlungsmaschinen 10, 20, 30, 40.

Zwischen der dritten und vierten Behälterbehandlungsmaschine 30, 40 werden die Behälter 2 mit einer Transporteinrichtung 60 mit Hilfe von Transportmodulen 61, 62, 63 transportiert. Das Transportmodul 61 hat eine Hubkurve 64, bei der eine Erfassungseinrichtung 65 und ein Drehgeber 66 vorgesehen sind.

Ansonsten weisen die Transporteinrichtungen 50, 60 bei dem Beispiel in Fig. 1 Multifunktionssterne oder Karussells zum Transport der Behälter 2 auf. Es ist auch möglich, dass mindestens eine der Behälterbehandlungsmaschinen 10, 20, 30, 40 alternativ als Multifunktionsstern oder Karussell ausgebildet ist oder ein solches aufweist.

Bei dem Beispiel von Fig. 1 bilden die Behälterbehandlungsmaschinen 10, 20, 30, 40 und die Transporteinrichtungen 50, 60 einen Block, der sehr kompakt aufgebaut ist. Auch die vierte Behälterbehandlungsmaschine 40 kann hierbei in der Nähe oder auch angrenzend am Block aus den Behälterbehandlungsmaschinen 10, 20, 30 und den Transporteinrichtungen 50, 60 angeordnet sein, auch wenn dies in Fig. 1 nicht dargestellt ist. Die Behälterbehandlungsanlage 1 und die Behälterbehandlungsmaschinen 10, 20, 30, 40 sind jedoch nicht darauf beschränkt und können auch in separater Ausführung aneinandergereiht sein.

Bei dem Beispiel von Fig. 1 ist die erste Behälterbehandlungsmaschine 10 eine Füllmaschine, in welcher die Behälter 2 zu sehr schematisch dargestellten Füllventilen 17, 18 bewegt werden, mit welchen aus mindestens einem Fülltank 19 mindestens ein Produkt in die von der Transporteinrichtung 50 zugeführten Behälter 2 abgefüllt wird. Das Produkt kann beispielsweise ein Lebensmittel, insbesondere ein Getränk usw., oder ein Reinigungsmittel oder Kosmetikprodukt oder ein Pulver oder Stückgut, insbesondere Kügelchen, usw., oder irgendein sonstiges Produkt sein, das in Behälter 2 abfüllbar ist. An dem Fülltank 19 kann auch ein Sensor zum Messen des Füllstands des Produkts im Fülltank 19 vorgesehen sein. Der Einfachheit halber sind ein solcher Sensor und auch weitere mögliche Sensoren, beispielsweise zur Erfassung der Stellung des Füllventils und/oder des Behälters 2 am Füllventil, usw. hier jedoch nicht dargestellt.

Bei dem Beispiel von Fig. 1 ist die zweite Behälterbehandlungsmaschine 20 ein Verschließer, welcher der Füllmaschine oder ersten Behälterbehandlungsmaschine 10 nachgeschaltet ist. In dem Verschließer als zweite Behälterbehandlungsmaschine 20 werden die Behälter 2 mit Hilfe von beispielsweise mindestens einer Schraubantriebseinrichtung 26, 27 mit einer Verschlusskappe versehen und dadurch verschlossen. Zur Vereinfachung sind weitere Komponenten der zweiten Behälterbehandlungsmaschine 20 nicht dargestellt und beschrieben.

Bei dem Beispiel von Fig. 1 ist die dritte Behälterbehandlungsmaschine 30 eine Ausstattungsmaschine, welche die von der Füllmaschine oder ersten Behälterbehandlungsmaschine 10 gefüllten Behälter 2 und dann mit der zweiten Maschine 20 geschlossenen Behälter 2 mit einer Kennzeichnung ausstattet durch beispielsweise das Etikett 3 und/oder eine beliebige Bedruckung 4. Hierfür hat die Ausstattungsmaschine bei dem Beispiel von Fig. 1 die Hubkurve 34. An der Hubkurve 34 werden die Behälter 2 mittels Halterungen vorbei an vier verschiedenen Modulen geführt, die insbesondere Ausstattungsmodule 36, 37, 38, 39 sind. Beispielweise ist das Ausstattungsmodul 36 ein Etikettier- und/oder Druckaggregat, das Ausstattungsmodul 37 ist ein Etikettieraggregat und die Ausstattungsmodule 38, 39 sind als Druckaggregate ausgebildet. Demzufolge kann das Etikett 3 ein vorgefertigtes Etikett sein. Jedoch kann das Etikett 3 auch erst mittels eines Etikettier- und/oder Druckaggregats zumindest teilweise gedruckt werden, was durch die Bedruckung 4 veranschaulicht ist. Alternativ kann das Etikettier- und/oder Druckaggregat auch zumindest teilweise direkt auf das Etikett 3 oder den Behälter 2 drucken. Insbesondere kann mit dem Etikettier- und/oder Druckaggregat oder den Druckaggregaten mit einem Drucker, wie einem Tintenstrahl- oder Laserdrucker, eine zusätzliche Kennzeichnung auf die Behälter 2 gedruckt werden, um eine Rückverfolgung der Behälter 2 oder Produkte sicherzustellen.

Alternativ können die Ausstattungsmodule 35 bis 38 jedoch jeweils gleich ausgestaltet sein, so dass alle Behälter 2 mit der gleichen Sorte von Kennzeichnungen, insbesondere Etiketten 3, versehen werden. Bei dem in Fig. 1 gezeigten Fall können die Behälter 2 insbesondere mit verschiedenen Etikettensorten, wie beispielsweise Bauch und/oder Brustetikett und/oder Rundumetikett von der Rolle oder als Blatt und/oder Selbstklebeetikett und/oder Kaltleimetikett und/oder Heißleimetikett usw. versehen werden. Es sind beliebige Kombinationen von Ausstattungsmodulen 35 bis 38 und damit Sorten von Kennzeichnungen, insbesondere Etikettensorten, denkbar und realisierbar.

Zur Vereinfachung sind weitere Komponenten der dritten Behälterbehandlungsmaschine 30, wie insbesondere Druckköpfe, Sensoren, Antriebseinrichtungen für Etikettenrollen, usw. nicht dargestellt und beschrieben.

Nach der dritten Behälterbehandlungsmaschine 30, der Ausstattungsmaschine bei dem zuvor gewählten Beispiel, werden die Behälter 2 mit Hilfe der Transporteinrichtung 60 der vierten Behälterbehandlungsmaschine 40 zugeführt, wie bereits zuvor erwähnt.

Die vierte Behälterbehandlungsmaschine 40 ist beispielsweise eine Verpackungsmaschine, bei welcher die Behälter 2 in vorbestimmte Sorten und/oder Verpackungsgrößen, verpackt werden, beispielsweise als Gebinde mit zwei Behältern 2 oder vier Behältern 2, mit oder ohne Tragegriff usw., oder in eine Kiste oder Karton, usw. Zum Herstellen von beispielsweise Gebinden oder auch für die Kartons kann eine Schrumpfstation vorgesehen sein. Auch bei der Verpackungsmaschine kann eine Hubkurve mit Erfassungseinrichtung vorgesehen sein, auch wenn dies in Fig. 1 nicht gezeigt ist.

Die zuvor beschriebenen Füllventile 17, 18, die Antriebseinrichtungen 26, 27, die Module 36 bis 39 und nachfolgend beschriebene Halteklammern sind Behandlungselemente 17, 18, 26, 27, 36 bis 39, 162 der Behälterbehandlungsanlage 1 bzw. ihrer jeweiligen Maschinen 10, 20, 30, 40.

Fig. 2 zeigt als Beispiel eine stark vereinfachte Schnittansicht der Hubkurve 14 mit der Erfassungseinrichtung 15. Die Hubkurven 24, 34, 54, 64 mit den jeweils zugehörigen Erfassungseinrichtungen 25, 35, 55, 65 sind auf die gleiche Weise ausgeführt, so dass die nachfolgende Beschreibung der Hubkurve 14 und der Erfassungseinrichtung 15 auch für die Hubkurven 24, 34, 54, 64 mit den jeweils zugehörigen Erfassungseinrichtungen 25, 35, 55, 65 gilt.

An der Hubkurve 14 ist eine Halterung 16 zum Transport eines Behälters 2 entlang der Hubkurve 14 vorgesehen. Die Halterung 16 hat mindestens eine Rolle 161, welche an der Hubkurve 14 abrollt. Genauer gesagt rollt sich bei dem Beispiel von Fig. 2 ein Wälzkörper 1611 der mindestens einen Rolle 161 oben auf der Hubkurve 14 ab. Hierfür ist der Wälzkörper 1611 über eine Achse 1612 drehbar an der Halterung 16 befestigt. Zudem hat die Halterung 16 eine Halteklammer 162 zum Halten des Behälters 2. Die Halterung 16 kann beispielsweise mittels nicht dargestellten Druckfedern oder anderweitig nach unten an der Hubkurve 14 vorgespannt sein, so dass die mindestens eine Rolle 161 sicher an der Hubkurve 14 läuft.

Wie auch aus Fig. 3 in einer Draufsicht auf einen anderen Abschnitt der Hubkurve 14 ersichtlich, läuft an der Hubkurve 14 in der Regel eine Vielzahl von Rollen 161 gleichzeitig. Die Rollen 161 rollen mit dem Außenumfang 1613 des Wälzkörpers 1611 Die Hubkurve 14 ist derart geformt, dass die Halterung 16 in der Höhe H verstellbar ist. Alternativ ist es beispielsweise möglich, beispielsweise eine Zentrierglocke, die zum Zentrieren der Behälter 2 an einem Drehteller dient, in der Höhe zu verstellen. Es sind beliebige andere Anwendungen für die Hubkurve 14 denkbar.

Die Rollen 161 injizieren jeweils Schwingungen in die Hubkurve 14. Die Schwingungen sind mit der Erfassungseinrichtung 15 als Körperschall bzw. Beschleunigung erfassbar. Damit der Körperschall nicht nur als breitbandiges Rauschen wahrnehmbar ist, sind die Hubkurve 14 und die Erfassungseinrichtung 15 ausgestaltet, wie nachfolgend beschrieben. Dadurch ist es möglich, mit der Erfassungseinrichtung 15 die Laufeigenschaften einer einzelnen Rolle 161 auf der Hubkurve 14 zu erfassen.

Die Hubkurve 14, wie auch jede andere der zuvor genannten Hubkurven, kann alternativ segmentförmig ausgestaltet sein. In diesem Fall laufen die Rollen 161 nicht auf einem durch die Hubkurve 14 geschlossenen Kreis sondern nur auf einem vorbestimmten Kreissegment. Die Hubkurve 14, wie auch jede andere der zuvor genannten Hubkurven, kann alternativ oder zusätzlich zumindest teilweise einen linearen oder ovalen Abschnitt aufweisen, wenn dies für den jeweiligen Anwendungsfall geeignet erscheint.

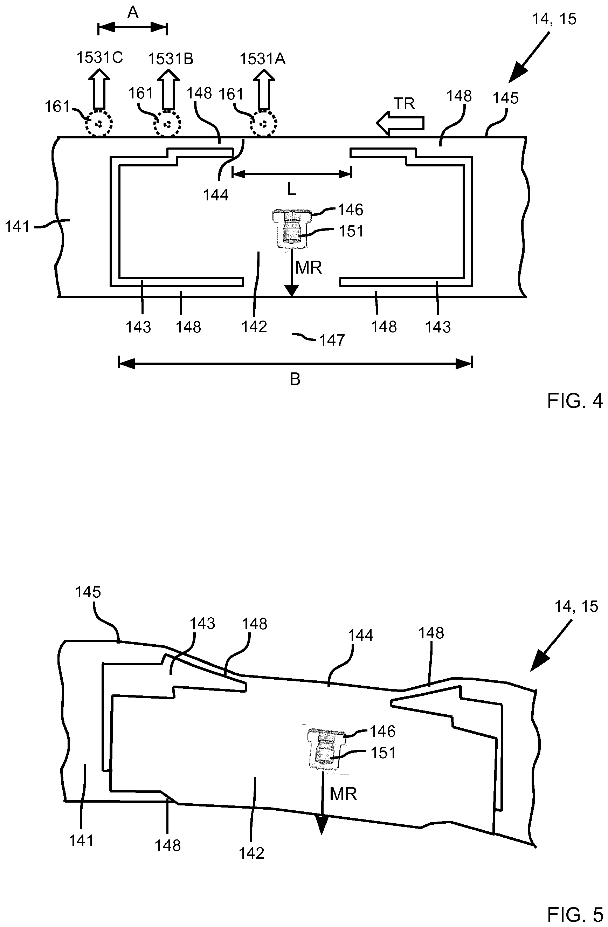

Gemäß Fig. 4 ist die Erfassungseinrichtung 15 teilweise in die Hubkurve 14 integriert, die hierfür speziell ausgestaltet ist. Die Hubkurve 14, die in Fig. 4 nur teilweise dargestellt ist, hat einen ersten Hubkurvenbereich 141, welcher bei dem Beispiel von Fig. 4 als Kreissegment dargestellt ist. Die Hubkurve 14 kann jedoch einen Vollkreis bilden, der den ersten Hubkurvenbereich 141 umfasst. Zudem hat die Hubkurve 14 einen zweiten Hubkurvenbereich 142, der bei dem Beispiel von Fig. 4 einteilig mit dem ersten Hubkurvenbereich 141 ausgestaltet ist. Der erste und zweite Hubkurvenbereich 141, 142 sind durch eine erste Aussparung 143 teilweise entkoppelt voneinander. Der erste und zweite Hubkurvenbereich 141, 142 sind nur im Bereich einer Erfassungsstrecke 144 miteinander verbunden und dadurch miteinander gekoppelt.

Die Erfassungsstrecke 144 mit einer Länge L ist entlang eines Rollwegs 145 der mindestens einen Rolle 161 an der Hubkurve 14 vorgesehen. Bei dem Beispiel von Fig. 4 ist der Rollweg 145 oben auf der Hubkurve 14 angeordnet. In einer zweiten Aussparung 146 des zweiten Hubkurvenbereichs 142 ist ein Sensor 151 der Erfassungseinrichtung 15 angeordnet. Die erste und zweite Aussparung 143, 146 sind in der Laufrichtung der Rolle 161 auf dem Rollweg 145 jeweils symmetrisch zu einer Symmetrielinie 147 der Erfassungsstrecke 144 angeordnet. Die Symmetrielinie 147 ist außerdem die Symmetrielinie des zweiten Hubkurvenbereichs 142. Somit ist die zweite Aussparung 143 in der Mitte des zweiten Hubkurvenbereichs 142 angeordnet. Der zweite Hubkurvenbereich 142 hat in Laufrichtung der mindestens einen Rolle 161 eine maximale Ausdehnung B.

Die maximale Ausdehnung B des zweiten Hubkurvenbereichs 142 in der Richtung der Länge L der Erfassungsstrecke 144 ist größer als die Länge L der Erfassungsstrecke 144. Zudem ist die Aussparung 143 in dem Bereich senkrecht zur Erfassungsrichtung MR bzw. parallel zu Rollweg 145 und zur Erfassungsstrecke 144 stufenförmig ausgeführt. Bei dem Beispiel von Fig. 4 hat der zweite Hubkurvenbereich 142 ausgehend von der Symmetrielinie 147 jeweils zwei Stufen bis zu einem Teil der Aussparung 143, der in etwa parallel zu der Symmetrielinie 147 angeordnet ist. Der zweite Hubkurvenbereich 142 ist in seiner Mitte bei der Symmetrielinie 147 breiter als an seinem Enden. Die genaue Ausgestaltung des Hubkurvenbereichs 142 ist im Rahmen der folgenden Bedingungen frei wählbar.

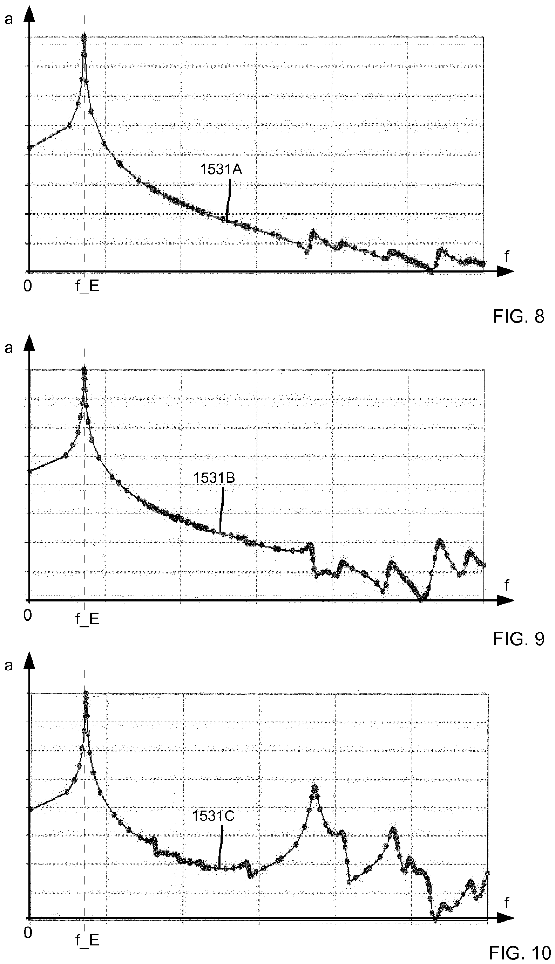

Läuft die mindestens eine Rolle 161 mit einem Abstand A zu einer optionalen nächsten Rolle 161 entlang des Rollwegs 145 in der Transportrichtung TR, werden mit dem Sensor 151 nacheinander verschiedene Erfassungsergebnisse 1531A, 1531B, 1531C erfasst, die in Bezug auf Fig. 8 bis Fig. 10 noch genauer erläutert sind.

Zur Auswertung des Zustands, insbesondere der Laufeigenschaften, einer einzelnen Rolle 161 ist der Rollweg 145 in seiner mechanischen Struktur derart ausgestaltet, dass der Sensor 151 in der Aussparung 146 sehr empfindlich auf Körperschall im Bereich der Erfassungsstrecke 144 ist. Dagegen kann der Sensor 151 in der Aussparung 146 Körperschall außerhalb der Erfassungsstrecke 144 kaum erfassen, da Anregungen außerhalb der Erfassungsstrecke 144 stark unterdrückt bzw. gedämpft werden.

Die schwingungsmäßige Entkopplung des zweiten Hubkurvenbereichs 142, einschließlich des darin in der Aussparung 146 angeordneten Sensors 151, von dem ersten Hubkurvenbereich 141 erfolgt durch eine gezielte Auslegung der Masse des zweiten Hubkurvenbereichs 142 und die Steifigkeit der Anbindung des ersten und zweiten Hubkurvenbereichs 141, 142 aneinander.

Wie in Zusammenschau von Fig. 4 und Fig. 5 ersichtlich, ist die Anbindung 148 des zweiten Hubkurvenbereichs 142 derart gewählt, dass sich eine geringe Steifigkeit in einer vorbestimmten Erfassungsrichtung MR ergibt, in welcher die Schwingungen erfasst werden. In den beiden anderen Richtungen des dreidimensionalen Raums ist die Anbindung 148 des zweiten Hubkurvenbereichs 142 steifer als in der Erfassungsrichtung MR ausgelegt. Vergleichsweise ist die Anbindung 148 des zweiten Hubkurvenbereichs 142 in den beiden anderen Richtungen des dreidimensionalen Raums sehr steif. Je nach Anwendung kann zusätzlich das Material der Erfassungsstrecke 144 weicher sein bzw. eine geringere Steifigkeit haben als das Material des übrigen Rollwegs 145 außerhalb der Erfassungsstrecke 144. Die Ausgestaltung der Anbindung 148 und die Aussparung 143 bewirken, dass die Erfassungsstrecke 144 und der Rollweg 145 schwingungsmäßig entkoppelt voneinander sind.

Gemäß Fig. 4 und Fig. 5 werden die Beschleunigungswerte senkrecht zum Rollweg 145 erfasst, der zum Abrollen der Lauffläche der Rolle 161 bzw. zum Abwälzen des Außenumfangs des Wälzkörpers 1611 dient. Der Rollweg 145 liegt in einer Ebene, die in etwa senkrecht zu der vorbestimmten Erfassungsrichtung MR angeordnet ist.

Die Kombination aus Masse und Steifigkeit des zweiten Hubkurvenbereichs 142 einschließlich des Sensors 151 ergibt eine Eigenfrequenz, mit welcher der zweite Hubkurvenbereich 142 in Erfassungsrichtung MR schwingt, wie in Fig. 5 veranschaulicht.

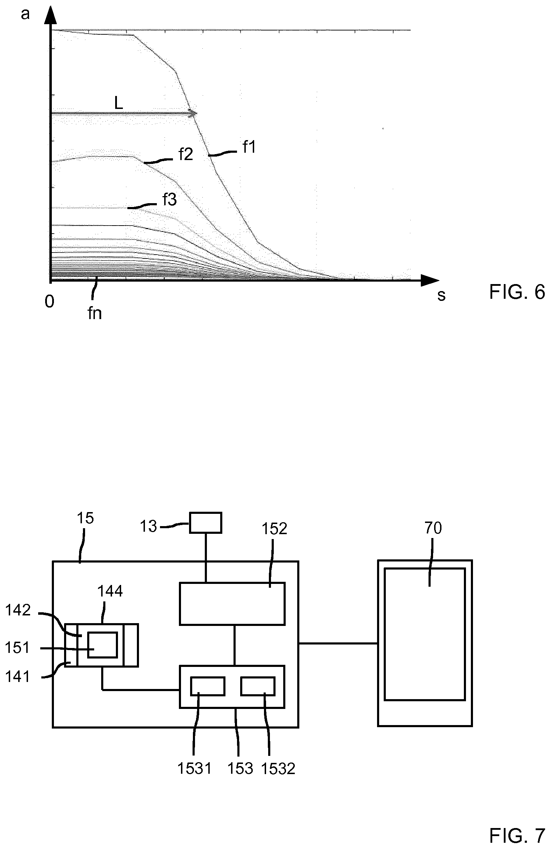

Wie in Fig. 6 für verschiedene Schwingungsfrequenzen f1, f2, f3, ... fn über dem Weg s ausgehend bei 0 als der Symmetrielinie 147 dargestellt, werden aufgrund dieser Anordnung Bewegungen a, wie Körperschall bzw. dadurch verursachte Schwingungen mit den Frequenzen f1, f2, f3, ... fn, sehr stark unterdrückt, die sowohl ihren Ursprung an einem Weg s außerhalb der Erfassungsstrecke 144 (Lange L) haben als auch eine größere Frequenz f als die Eigenfrequenz des Hubkurvenbereichs 142 einschließlich des Sensors 151 haben und in Richtung der Erfassungsrichtung MR weisen. Andererseits werden Bewegungen a, wie Körperschall bzw. dadurch verursachte Schwingungen mit den Frequenzen f1, f2, f3, ... fn, die ihren Ursprung in der Länge L der Erfassungsstrecke 144 haben und in Erfassungsrichtung MR weisen, eine hohe Amplitude der Beschleunigung a zur Folge haben, wie in Fig. 6 gezeigt.

Die Erfassungsstrecke 144 ist zwischen der Aussparung 143 derart lang ausgelegt, dass die Länge L der Erfassungsstrecke 144 minimal genau einer Abwicklung einer Umdrehung des Wälzkörpers 1611 einer Rolle 161 entspricht. Die Länge L der Erfassungsstrecke 144 entspricht somit mindestens dem Außenumfang des Wälzkörpers 1611 einer Rolle 161. Die maximale Länge L der Erfassungsstrecke 144 hängt mit dem Abstand A der Rollen 161 zusammen, was nachfolgend noch genauer erläutert ist.
Als Folge davon werden mit der Erfassungseinrichtung 15 als die Erfassungsergebnisse 1531A bis 1531C Beschleunigungsamplituden erfasst, die eine höhere Frequenz als die Eigenfrequenz des zweiten Hubkurvenbereichs 142 einschließlich des Sensors 151 aufweisen.

Gemäß Fig. 7 hat die Erfassungseinrichtung 15 zusätzlich zu dem Sensor 151 ein Auswertemodul 152 und ein Speichermodul 153. Der Sensor 151 ist insbesondere als Beschleunigungssensor ausgestaltet. Die Erfassungsergebnisse 1531A bis 1531C des Sensors 151 werden als Istwert oder Erfassungsergebnis 1531 in dem Speichermodul 153 gespeichert. Zudem ist in dem Speichermodul 153 mindestens ein Sollwert 1532 gespeichert, der einem Erfassungsergebnis einer idealen Rolle 161 entspricht. Der Sollwert 1532 ist insbesondere eine Referenzkurve. Das Erfassungsergebnis 1531 bzw. die Erfassungsergebnisse 1531A bis 1531C und der Sollwert 1532 sind jeweils einer Ausgabe des Drehgebers 13 zugeordnet. Somit kann das Auswertemodul 152 das Erfassungsergebnis 1531 bzw. die Erfassungsergebnisse 1531A bis 1531C und den Sollwert 1532 lagerichtig an der Hubkurve 14 zueinander auswerten. Damit können die Erfassungsergebnisse 1531A bis 1531C den einzelnen Rollen 161 an der Hubkurve 14 zugeordnet werden.

Das Auswerteergebnis und/oder das Erfassungsergebnis 1531 bzw. die Erfassungsergebnisse 1531A bis 1531C und der Sollwert 1532 sind an eine Bedieneinrichtung 70 übertragbar. Dadurch ist es möglich, dass ein Bediener der Behälterbehandlungsanlage 1 auf Anforderung oder automatisch über die Laufeigenschaften mindestens einer der Rollen 161 informiert wird. Aus den Laufeigenschaften ist durch Vergleich mit dem Sollwert 1532 der Verschleißzustand der jeweiligen Rolle 161 ableitbar. Beispielsweise kann für eine noch tolerierbaren Abnutzung oder Verschleiß ein vorbestimmtes Toleranzband definiert sein. Liegen die Laufeigenschaften der betrachteten Rolle 161 außerhalb des Toleranzbands wird die Rolle 161 als verschlissen beurteilt. Ansonsten kann die betrachtete Rolle 161 weiterverwendet werden. Anstelle eines Toleranzbandes kann jedoch auch nur eine Grenze festgelegt sein, bei deren Überschreiten die Rolle 161 als verschlissen beurteilt wird.

Fig. 8 bis Fig. 10 zeigen Beispiele für die Ausgaben der Erfassungsergebnisse 1531A bis 1531C. Hierbei ist jeweils nur die Schwingung bzw. Beschleunigung a in Bezug auf eine Frequenz f dargestellt. Das Erfassungsergebnis 1531A gemäß Fig. 8 entspricht einer Erfassung der Schwingungen bzw. deren Frequenzen f an der Erfassungsstelle in Messrichtung MR des Sensors 151, wenn durch eine Rolle 161 eine Schwingung mit der Beschleunigung a mit immer der gleichen Amplitude jedoch veränderlicher Frequenz f bei einer Position eingekoppelt wird/werden, die um einen Winkel von ca. 4° gegenüber der Symmetrielinie 147 versetzt angeordnet ist, wie in Fig. 4 gezeigt. Das Erfassungsergebnis 1531B gemäß Fig. 9 entspricht einer Erfassung der Schwingungen bzw. deren Frequenzen f für eine Rolle 161, die anstelle der Position von 4° gemäß Fig. 8 bei einer Position angeordnet ist, die um einen Winkel von ca. 16° gegenüber der Symmetrielinie 147 versetzt angeordnet ist, wie in Fig. 4 gezeigt. Das Erfassungsergebnis 1531C gemäß Fig. 10 entspricht einer Erfassung der Schwingungen bzw. deren Frequenzen f für eine Rolle 161, die anstelle der Position von 4° gemäß Fig. 8 bei einer Position eingekoppelt wird/werden, die um einen Winkel von ca. 28° gegenüber der Symmetrielinie 147 versetzt angeordnet ist, wie in Fig. 4 gezeigt.

Fig. 8 bis Fig. 10 geben somit jeweils ein Frequenzspektrum für die verschiedenen Positionen der Rollen 161 an der Hubkurve 14 an. Daraus lässt sich deutlich die Eigenfrequenz f_E der mechanischen Struktur des zweiten Hubkurvenbereichs 142 ablesen, nämlich als die Spitze der erfassbaren Amplituden der Beschleunigung a über der Frequenz f bei den jeweiligen Positionen 4°, 16°, 28°.

Hierbei sind in Fig. 8 bis Fig. 10 die vertikalen Skalierungen der Darstellung unterschiedlich gewählt. Effektiv sind die Amplituden des Erfassungsergebnisses 1531A für die Beschleunigung a am größten und die Amplituden des Erfassungsergebnisses 1531C für die Beschleunigung a am kleinsten, auch wenn sich dies aus dem direkten Vergleich von Fig. 8 bis Fig. 10 nicht ergibt. Dies stimmt mit der Darstellung von Fig. 6 überein, gemäß welcher die Amplituden der erfassten Beschleunigung a mit zunehmender Entfernung von der Symmetrielinie 147 abnehmen.

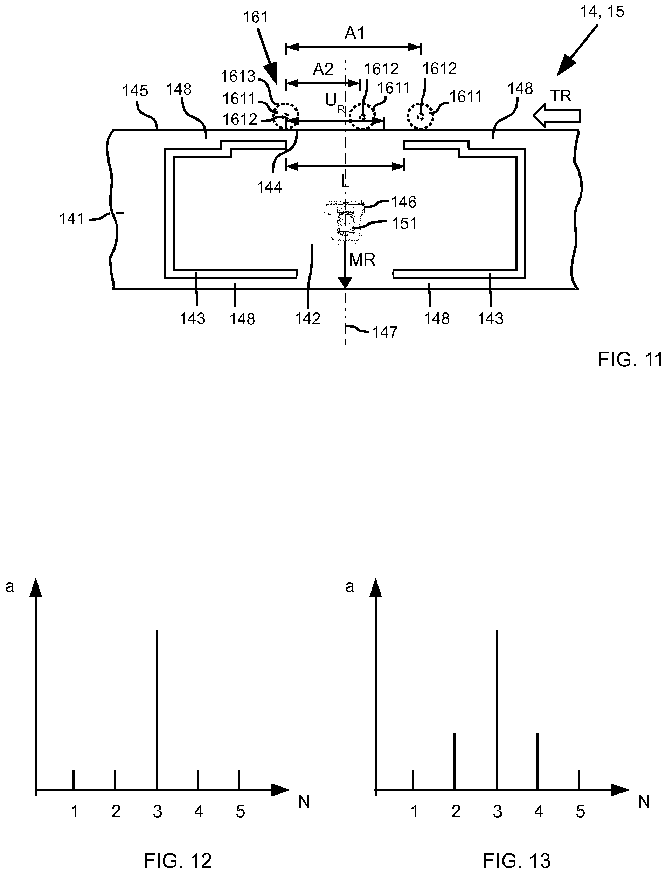

Fig. 11 veranschaulicht zwei Fälle, nämlich einen ersten Fall, bei welchem zwischen den Achsen 1612 von zwei aufeinanderfolgenden Rollen 161 ein Abstand A1 vorhanden ist, und einen zweiten Fall, bei welchem zwischen den Achsen 1612 von zwei aufeinanderfolgenden Rollen 161 ein Abstand A2 vorhanden ist. Hierbei ist die Abwicklung U_{R} einer Umdrehung des Wälzkörpers 1611 bzw. der Außenumfang 1613 einer Rolle 161 kleiner als die Länge L der Erfassungsstrecke 144.

Das Auswertemodul 152 der Erfassungseinrichtung 15 berechnet für ein einer Rolle 161 zugeordnetes Auswerte-Winkelintervall der Maschine 10 die Amplitude der Beschleunigung a oder ein Erfassungssignal als Schwingungseffektivwert, wobei pro Rolle 161 eine Amplitude der Beschleunigung a berechnet wird. Pro Umdrehung der Maschine 10 bzw. pro Umlauf einer Rolle 161 um die Maschine 10 wird diese Amplitude der Beschleunigung a neu berechnet und über eine Mittelung, die insbesondere mit einem Mittelungsalgorithums des Auswertemoduls 152 ausführbar ist, mit vorausgehenden Erfassungswerten verrechnet.

Das Ergebnis dieser Auswertung ist in Fig. 12 für fünf aufeinanderfolgende Rollen 161 für den ersten Fall gezeigt, bei dem der Abstand A1 zwischen den Achsen 1612 von zwei aufeinanderfolgenden Rollen 161 vorhanden ist. In Fig. 13 ist das Ergebnis dieser Auswertung für fünf aufeinanderfolgende Rollen 161 für den zweiten Fall gezeigt, bei dem der Abstand A2 zwischen den Achsen 1612 von zwei aufeinanderfolgenden Rollen 161 vorhanden ist.

Wie aus Fig. 12 erkennbar, ist bei dem ersten Fall von Fig. 11 eine sehr scharfe Abgrenzung der Amplitude der Beschleunigung a der dritten Rolle 161 auf der Erfassungsstrecke 144 von der Amplitude der Beschleunigung a der benachbarten Rollen 161 erkennbar, die nicht auf der Erfassungsstrecke 144 angeordnet sind. In diesem Fall werden im jeweiligen Auswerte-Winkelintervall für die dritte Rolle 161 auf der Erfassungsstrecke 144 annähernd ausschließlich Schwingungen gemessen, die von dieser Rolle 161 selbst stammen.

Wie aus Fig. 13 erkennbar, ist bei dem zweiten Fall von Fig. 11 eine weniger scharfe Abgrenzung der Amplitude der Beschleunigung a der dritten Rolle 161 auf der Erfassungsstrecke 144 von der Amplitude der Beschleunigung a der benachbarten Rollen 161 erkennbar. Dies ergibt sich dadurch, dass auch die zweite und/oder vierte Rolle zumindest teilweise gleichzeitig mit der dritten Rolle über die Erfassungsstrecke 144 rollen.

Somit erhöht sich die Beschleunigungsamplitude von Rollen 161 ebenfalls, die benachbart zu einer verschlissenen Rolle 161 angeordnet sind. Der Grund dafür liegt darin, dass sich die Auswerte-Winkelintervalle zur Berechnung einer Beschleunigungsamplitude überlappen. Somit ist bei dem in Fig. 13 veranschaulichten Fall die Amplitude der Beschleunigung a für die zweite und vierte Rolle 161 ebenfalls erhöht, wenn die dritte Rolle 161 verschlissen ist. Die Erhöhung des Schwingungseffektivwerts ist aber trotzdem bei der jeweils auszuwertenden Rolle 161 am höchsten.

Somit ist sowohl für den ersten Fall von Fig. 11 als auch für den zweiten Fall von Fig. 11 die selektive Auswertung der Laufeigenschaften der Rollen 161 an der Hubkurve 14 möglich. In anderen Worten, die Auswertung der Laufeigenschaften der Rollen 161 an der Hubkurve 14 ist mit der Erfassungseinrichtung 15 auch möglich, wenn die Länge L der Erfassungsstrecke 144 kleiner als der Abstand A (Fig. 4) bzw. A1 (Fig. 11) der Rollen 161 ist bzw. gilt L < A oder L < A1.

Somit werden mit der Erfassungseinrichtung 15 die Schwingungen erfasst und ausgewertet, die durch den abrollenden Wälzkörper 1611 einer einzelnen Rolle 161 in dem zweiten Hubkurvenbereich 142 in Erfassungsrichtung MR erzeugt werden. Hierbei werden die gemessenen Amplituden der Beschleunigung a durch Einbeziehung der Ausgabe des Drehgebers 13 einem bestimmten Maschinenwinkel der ersten Behälterbehandlungsmaschine 10 oder einer sonstigen Rundläufermaschine oder Rundläufertransporteinrichtung wie bei der Transporteinrichtung 50 oder der Transporteinrichtung 60 zugeordnet.

Auf diese Weise kann die selektive Auswertung der Laufeigenschaften mindestens einer Rolle 161 der Rollen 161 einfach und sicher durchgeführt werden, um den Verschleißzustand jeder einzelnen Rolle 161 an der Hubkurve 14 zu bestimmen.

Es ist auch möglich, das zuvor beschriebene Prinzip bei einer Anordnung anzuwenden, bei welcher die Rollen 161 nicht in einer Kreisbewegung über einen Rollweg 145 geführt werden sondern über einen Rollweg 145 hin und her bewegt werden können. Auch hier kann eine Erfassungsstrecke 144 vorhanden sein, welche die Laufeigenschaften einer einzelnen Rolle 161 erfassen kann. Hier ist es gegebenenfalls denkbar, von allen Rollen 161, die auf dem Rollweg 145 laufen, nur die Laufeigenschaften mindestens einer einzelnen Rolle 161 mit einer Erfassungseinrichtung 15 zu erfassen. Von den Laufeigenschaften der mindestens einen einzelnen Rolle 161 kann dann auf die Laufeigenschaften der anderen Rollen 161 zurückgeschlossen werden. Auch wenn dies in Bezug auf die Erfassung der Laufeigenschaften für jede einzelne Rolle 161 weniger optimal ist, so kann eine derartige Anordnung dennoch bei Bedarf ausreichend sein und bietet in jedem Fall eine Verbesserung gegenüber dem Stand der Technik.

Alle zuvor beschriebenen Ausgestaltungen der Behälterbehandlungsanlage 1 und des von ihr ausgeführten Verfahren zur Erfassung von Laufeigenschaften einer Rolle 161 an einer Hubkurve 14, 24, 34, 54, 64 können einzeln oder in allen möglichen Kombinationen Verwendung finden. Insbesondere können die Merkmale der zuvor beschriebenen Ausführungsbeispiele beliebig kombiniert oder auch weggelassen werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Mindestens eine der Behälterbehandlungsmaschinen 10, 20, 30, 40 kann eine Streckblasmaschine zum Herstellen von Behältern 2 aus Preforms sein. Mindestens eine der Behälterbehandlungsmaschinen 10, 20, 30, 40 kann eine Heizeinrichtung sein, die in der Streckblasmaschine zum Heizen der Preforms verwendet wird. Mindestens eine der Behälterbehandlungsmaschinen 10, 20, 30, 40 kann eine Inspektionsmaschine zum Inspizieren der Behälter 2 auf Fehler sein. Mindestens eine der Behälterbehandlungsmaschinen 10, 20, 30, 40 kann eine Reinigungsmaschine zum Reinigen des mindestens einen Behälters 2 sein.

Es sind selbstverständlich auch alle anderen Behälterbehandlungsmaschinen als Behälterbehandlungsmaschine(n) 10, 20, 30 möglich, die zur Behandlung von Behältern 2 ausgestaltet sind. Die Behälterbehandlungsanlage 1 kann in beliebiger Anzahl, Kombination und Ausführung Behälterbehandlungsmaschinen 10, 20, 30, 40, und/oder weitere Behälterbehandlungsmaschinen, wie zuvor beschrieben, gegebenenfalls davor und/oder dazwischen und/oder danach angeordneten Transporteinrichtungen 50, 60 in beliebiger Anzahl, Kombination und Ausführung aufweisen.

### Bezugszeichenliste

- 1: Behälterbehandlungsanlage
- 2: Behälter
- 3: Etikett
- 4: Bedruckung
- 10: erste Behälterbehandlungsmaschine, Füllmaschine
- 13, 23, 33, 53, 66: Drehgeber
- 14, 24, 34, 54, 64: Hubkurve
- 15, 25, 35, 55, 65: Erfassungseinrichtung
- 16: Halterung
- 17, 18: Füllventil (Behandlungselement)
- 19: Fülltank
- 20: zweite Behälterbehandlungsmaschine, Verschließer
- 26, 27: Schraubantriebseinrichtung (Behandlungselement)
- 30: dritte Behälterbehandlungsmaschine, Ausstattungsmaschine, Etikettiermaschine und/oder Druckmaschine
- 36 bis 39: Modul, Ausstattungsmodul (Behandlungselement)
- 40: vierte Behälterbehandlungsmaschine, Verpackungsmaschine
- 50: erste Transporteinrichtung
- 60: zweite Transporteinrichtung
- 61, 62, 63: Transportmodul
- 80: Bedieneinrichtung
- 141: erster Hubkurvenbereich
- 142: zweiter Hubkurvenbereich
- 143: erste Aussparung
- 144: Erfassungsstrecke
- 145: Rollweg
- 146: zweite Aussparung
- 147: Symmetrielinie
- 148: Anbindung des zweiten Hubkurvenbereichs
- 151: Sensor
- 152: Auswertemodul
- 153: Speichermodul
- 161: Rolle
- 162: Halteklammer (Behandlungselement)
- 1531, 1531A bis 1531C: Erfassungsergebnis, Istwert
- 1532: Sollwert
- 1611: Wälzkörper
- 1612: Achse
- 1613: Außenumfang des Wälzkörpers
- a: Beschleunigung
- A, A1, A2: Abstand zwischen zwei Rollen
- B: Ausdehnung zweiter Hubkurvenbereich
- f, f1, f2, f3, ... fn: Schwingungsfrequenzen
- f_E: Eigenfrequenz des zweiten Hubkurvenbereichs
- H: Höhe
- L: Länge der Erfassungsstrecke
- N: Anzahl der Rollen
- MR: Erfassungsrichtung
- TR: Transportrichtung
- U_{R}: Abwicklung Außenumfang Wälzkörper
- s: Weg

## Patentansprüche

1. Behälterbehandlungsanlage (1), mit
mindestens einem Behandlungselement (17, 18; 26, 27; 36 bis 39; 162) zum Behandeln mindestens eines Behälters (2),
einer Hubkurve (14; 24; 34; 54; 64) zum Verstellen des mindestens einen Behandlungselements (17, 18; 26, 27; 36 bis 39; 162) und/oder des mindestens eines Behälters (2) relativ zueinander, **gekennzeichnet durch**:
eine Erfassungseinrichtung (15) zur selektiven Erfassung der Laufeigenschaften einer einzelnen Rolle (161) an der Hubkurve (14; 24; 34; 54; 64),
wobei die Erfassungseinrichtung (15) eine Erfassungsstrecke (144) aufweist, die einen ersten Hubkurvenbereich (141) und einen zweiten Hubkurvenbereich (142) miteinander koppelt, in welchem ein Sensor (151) der Erfassungseinrichtung (15) zur Erfassung von Schwingungen angeordnet ist, die von einer Rolle (161) in der Erfassungsstrecke (144) injiziert werden, und
wobei der erste Hubkurvenbereich (141) und der zweite Hubkurvenbereich (142) mit Ausnahme der Erfassungsstrecke (144) durch eine Aussparung (143) voneinander entkoppelt sind.

2. Behälterbehandlungsanlage (1) nach Anspruch 1, wobei die Erfassungseinrichtung (15) an der Hubkurve (14; 24; 34; 54; 64) derart angeordnet ist, dass die Erfassungseinrichtung (15) die Laufeigenschaften für jede einzelne Rolle (161) selektiv erfasst, die an der Hubkurve (14; 24; 34; 54; 64) läuft.

3. Behälterbehandlungsanlage (1) nach Anspruch 1 oder 2,
wobei die Hubkurve (14; 24; 34; 54; 64) den ersten Hubkurvenbereich (141) und den zweiten Hubkurvenbereich (142) aufweist, die schwingungsmäßig voneinander entkoppelt sind, und
wobei der Sensor (151) der Erfassungseinrichtung (15) in dem zweiten Hubkurvenbereich (142) angeordnet ist.

4. Behälterbehandlungsanlage (1) nach einem der vorangehenden Ansprüche,
wobei die Erfassungsstrecke (144) derart ausgestaltet ist, dass der zweite Hubkurvenbereich (142) in einer vorbestimmten Erfassungsrichtung (MR) relativ zu dem ersten Hubkurvenbereich (141) schwingt, wenn auf der Erfassungsstrecke (144) eine Rolle (161) abrollt, und
wobei die Erfassungsstrecke (144) gegenüber Schwingungen unempfindlich ist, die in einen übrigen Rollweg (145) der Hubkurve (14; 24; 34; 54; 64) injiziert werden.

5. Behälterbehandlungsanlage (1) nach einem der vorangehenden Ansprüche,
wobei die Erfassungsstrecke (144) eine Länge (L) hat, die mindestens einem Außenumfang (1613) eines Wälzkörpers (1611) der Rolle (161) entspricht, die auf der Erfassungsstrecke (144) abrollt.

6. Behälterbehandlungsanlage (1) nach einem der vorangehenden Ansprüche,
wobei die vorbestimmte Erfassungsrichtung (MR) in etwa senkrecht zu einer Ebene angeordnet ist, in welcher die Rollen (161) an der Erfassungsstrecke (144) abrollen .

7. Behälterbehandlungsanlage (1) nach einem der vorangehenden Ansprüche,
wobei die Ausdehnung des zweiten Hubkurvenbereichs (142) in der Richtung der Länge (L) der Erfassungsstrecke (144) größer als die Länge (L) der Erfassungsstrecke (144) ist.

8. Behälterbehandlungsanlage (1) nach einem der vorangehenden Ansprüche, wobei die Erfassungseinrichtung (15) als Sensor (151) einen Beschleunigungssensor aufweist, der zum Erfassen von Beschleunigungsamplituden ausgestaltet ist.

9. Behälterbehandlungsanlage (1) nach einem der vorangehenden Ansprüche, wobei die Erfassungseinrichtung (15) zudem ein Auswertemodul (152) aufweist, das ausgestaltet ist, die Erfassungsergebnisse des Sensors (151) unter Berücksichtigung einer Ausgabe eines Drehgebers (13) auszuwerten, um die Erfassungsergebnisse des Sensors (151) den einzelnen Rollen (161) an der Hubkurve (14; 24; 34; 54; 64) zuzuordnen.

10. Behälterbehandlungsanlage (1) nach einem der vorangehenden Ansprüche, wobei die Behälterbehandlungsanlage (1) eine Streckblasmaschine und/oder eine Füllmaschine (10) und/oder ein Verschließer (20) und/oder eine Ausstattungsmaschine (30) und/oder eine Verpackungsmaschine (40) ist oder aufweist.

11. Verfahren zur Erfassung von Laufeigenschaften einer Rolle (161) an einer Hubkurve (14; 24; 34; 54; 64) einer Behälterbehandlungsanlage (1), wobei das Verfahren die Schritte aufweist
Verstellen, mit einer Hubkurve (14; 24; 34; 54; 64), mindestens eines Behandlungselement (17, 18; 26, 27; 36 bis 39; 162) und/oder des mindestens eines Behälters (2) relativ zueinander, um in der Behälterbehandlungsanlage (1) mindestens einen Behälter (2) mit dem mindestens einen Behandlungselement (17, 18; 26, 27; 36 bis 39; 162) zu behandeln, und
selektiv Erfassen, mit einer Erfassungseinrichtung (15), der Laufeigenschaften einer einzelnen Rolle (161) an der Hubkurve (14; 24; 34; 54; 64),
wobei die Erfassungseinrichtung (15) eine Erfassungsstrecke (144) aufweist, die einen ersten Hubkurvenbereich (141) und einen zweiten Hubkurvenbereich (142) miteinander koppelt, in welchem ein Sensor (151) der Erfassungseinrichtung (15) zur Erfassung von Schwingungen angeordnet ist, die von einer Rolle (161) in der Erfassungsstrecke (144) injiziert werden, und
wobei der erste Hubkurvenbereich (141) und der zweite Hubkurvenbereich (142) mit Ausnahme der Erfassungsstrecke (144) durch eine Aussparung (143) voneinander entkoppelt sind.

## Claims

1. Container handling installation (1), comprising
at least one handling element (17, 18; 26, 27; 36 to 39; 162) for treating at least one container (2),
a lifting curve (14; 24; 34; 54; 64) for adjusting the at least one a handling element (17, 18; 26, 27; 36 to 39; 162) and / or the at least one container (2) relative to one another, **characterized by**
a detecting means (15) for selectively detecting the running properties of a single roller (161) on the lifting curve (14; 24; 34; 54; 64),
wherein the detecting means (15) comprises a detection path (144) coupling a first lifting curve region (141) and a second lifting curve region (142), in which a sensor (151) of the detecting means (15) is positioned to detect vibrations which are injected by a roller (161) in the detection path (144), and
wherein the first lifting curve region (141) and a second lifting curve region (142) are decoupled from each other by a recess (143) except for the detection path (144).

2. Container handling installation (1) according to claim 1, wherein the detecting means (15) is positioned on the lifting curve (14; 24; 34; 54; 64) such that the detecting means (15) selectively detects the running properties for each individual roller (161) running on the lifting curve (14; 24; 34; 54; 64).

3. Container handling installation (1) according to claim 1 or 2,
wherein the lifting curve (14; 24; 34; 54; 64) comprises the first lifting curve region (141) and the second lifting curve region (142), which are decoupled in terms of vibration, and
wherein a sensor (151) of the detecting means (15) is positioned in the second lifting curve region (142).

4. Container handling installation (1) according to any one of the preceding claims,
wherein the detecting path (144) is configured such that the second lifting curve region (142) vibrates in a predetermined detection direction (MR) relative to the first lifting curve region (141) when a roller (161) rolls on the detection path (144), and
wherein the detection path (144) is insensitive to vibrations that are injected into another running path (145) of the lifting curve (14; 24; 34; 54; 64).

5. Container handling installation (1) according to any one of the preceding claims,
wherein the detection path (144) has a length (L) which corresponds to at least an outer circumference (1613) of a rolling element (1611) of the roller (161) which rolls on the detection path (144).

6. Container handling installation (1) according to any one of the preceding claims,
wherein the predetermined detection direction (MR) is positioned approximately perpendicular to a plane in which the rollers (161) roll on the detection path (144).

7. Container handling installation (1) according to any one of the preceding claims,
wherein the extension of the second lifting curve region (142) in the direction of the length (L) of the detection path (144) is greater than the length (L) of the detection path (144).

8. Container handling installation (1) according to any one of the preceding claims, wherein the detecting means (15) has as sensor (151) an acceleration sensor which is configured to detect acceleration amplitudes.

9. Container handling installation (1) according to any one of the preceding claims, wherein the detecting means (15) further comprises an evaluation module (152) configured to evaluate the detection results of the sensor (151) taking into account an output of a rotary encoder (13) in order to assign the detection results of the sensors (151) to the individual rollers (161) on the lifting curve (14; 24; 34; 54; 64).

10. Container handling installation (1) according to one of the preceding claims, wherein the container handling installation (1) comprises or is a stretch blow molding machine and / or a filling machine (10) and / or a capper (20) and / or an equipment machine (30) and / or a packaging machine (40).

11. Method for detecting the running properties of a roller (161) on a lifting curve (14; 24; 34; 54; 64) of a container handling installation (1), the method comprising the steps of
adjusting, by a lifting curve (14; 24; 34; 54; 64), at least one handling element (17, 18; 26, 27; 36 to 39; 162) and / or the at least one container (2) relative to one another to handle in the container handling installation (1) at least one container (2) with the at least one a handling element (17, 18; 26, 27; 36 to 39; 162),
**characterized by**
selectively detecting, by a detecting means (15), the running properties of an individual roller (161) on the lifting curve (14; 24; 34; 54; 64),
wherein the detecting means (15) comprises a detection path (144) coupling a first lifting curve region (141) and a second lifting curve region (142), in which a sensor (151) of the detecting means (15) is positioned to detect vibrations which are injected by a roller (161) in the detection path (144), and
wherein the first lifting curve region (141) and a second lifting curve region (142) are decoupled from each other by a recess (143) except for the detection path (144).

## Revendications

1. Installation de traitement de contenants (1), avec
au moins un élément de traitement (17, 18; 26, 27; 36 à 39; 162) pour le traitement d'au moins un contenant (2),
une came de levage (14; 24; 34; 54; 64) pour le déplacement de l'au moins un élément de traitement (17, 18; 26, 27; 36 à 39; 162) et/ou de l'au moins un contenant (2) l'un par rapport à l'autre, **caractérisée par** :
un dispositif de détection (15) pour la détection sélective des propriétés de roulement d'un galet (161) individuel sur la came de levage (14; 24; 34; 54; 64),
dans laquelle le dispositif de détection (15) présente un trajet de détection (144), qui accouple une première zone de came de levage (141) et une deuxième zone de came de levage (142) l'une à l'autre, dans laquelle est disposé un capteur (151) du dispositif de détection (15) destiné à détecter des oscillations qui sont injectées par un galet (161) dans le trajet de détection (144), et
dans laquelle la première zone de came de levage (141) et la deuxième zone de came de levage (142) sont découplées l'une de l'autre par un évidement (143) à l'exception du trajet de détection (144).

2. Installation de traitement de contenants (1) selon la revendication 1, dans laquelle le dispositif de détection (15) est disposé sur la came de levage (14; 24; 34; 54; 64) de telle sorte que le dispositif de détection (15) détecte de manière sélective les propriétés de roulement pour chaque galet (161) individuel qui circule sur la came de levage (14; 24; 34; 54; 64).

3. Installation de traitement de contenants (1) selon la revendication 1 ou 2,
dans laquelle la came de levage (14; 24; 34; 54; 64) présente la première zone de came de levage (141) et la deuxième zone de came de levage (142), qui sont découplées l'une de l'autre pour ce qui est des vibrations, et
dans laquelle le capteur (151) du dispositif de détection (15) est disposé dans la deuxième zone de came de levage (142).

4. Installation de traitement de contenants (1) selon l'une quelconque des revendications précédentes,
dans laquelle le trajet de détection (144) est configuré de telle sorte que la deuxième zone de came de levage (142) oscille par rapport à la première zone de came de levage (141) dans une direction de détection (MR) prédéfinie, lorsqu'un galet (161) roule sur le trajet de détection (144), et
dans laquelle le trajet de détection (144) est insensible aux oscillations qui sont injectées dans une voie de roulement (145) restante de la came de levage (14; 24; 34; 54; 64).

5. Installation de traitement de contenants (1) selon l'une quelconque des revendications précédentes,
dans laquelle le trajet de détection (144) présente une longueur (L) qui correspond à au moins une périphérie extérieure (1613) d'un corps de roulement (1611) du galet (161) qui roule sur le trajet de détection (144).

6. Installation de traitement de contenants (1) selon l'une quelconque des revendications précédentes,
dans laquelle la direction de détection (MR) prédéfinie est disposée sensiblement perpendiculairement à un plan dans lequel les galets (161) roulent sur le trajet de détection (144).

7. Installation de traitement de contenants (1) selon l'une quelconque des revendications précédentes,
dans laquelle l'étendue de la deuxième zone de came de levage (142) dans la direction de la longueur (L) du trajet de détection (144) est plus grande que la longueur (L) du trajet de détection (144).

8. Installation de traitement de contenants (1) selon l'une quelconque des revendications précédentes, dans laquelle le dispositif de détection (15) présente comme capteur (151) un capteur d'accélération, qui est configuré pour détecter des amplitudes d'accélération.

9. Installation de traitement de contenants (1) selon l'une quelconque des revendications précédentes, dans laquelle le dispositif de détection (15) présente en outre un module d'évaluation (152), qui est configuré pour évaluer les résultats de détection du capteur (151) avec prise en compte d'une sortie d'un capteur rotatif (13), afin d'associer les résultats de détection du capteur (151) aux galets (161) individuels sur la came de levage (14; 24; 34; 54; 64).

10. Installation de traitement de contenants (1) selon l'une quelconque des revendications précédentes, dans laquelle l'installation de traitement de contenants (1) est ou présente une machine d'étirage-soufflage et/ou une machine de remplissage (10) et/ou un dispositif de fermeture (20) et/ou une machine d'équipement (30) et/ou une machine d'emballage (40).

11. Procédé pour détecter des propriétés de roulement d'un galet (161) sur une came de levage (14; 24; 34; 54; 64) d'une installation de traitement de contenants (1), dans lequel le procédé présente les étapes :
de déplacement, avec une came de levage (14; 24; 34; 54; 64), d'au moins un élément de traitement (17, 18; 26, 27; 36 à 39; 162) et/ou de l'au moins un contenant (2) l'un par rapport à l'autre, afin de traiter dans l'installation de traitement de contenants (1) au moins un contenant (2) avec l'au moins un élément de traitement (17, 18; 26, 27; 36 à 39; 162), et
de détection sélective, avec un dispositif de détection (15), des propriétés de roulement d'un galet (161) individuel sur la came de levage (14; 24; 34; 54; 64),
dans lequel le dispositif de détection (15) présente un trajet de détection (144) qui accouple une première zone de came de levage (141) et une deuxième zone de came de levage (142) l'une à l'autre, dans laquelle est disposé un capteur (151) du dispositif de détection (15) destiné à détecter des oscillations qui sont injectées par un rouleau (161) dans le trajet de détection (144), et
dans lequel la première zone de came de levage (141) et la deuxième zone de came de levage (142) sont découplées l'une de l'autre par un évidement (143) à l'exception du trajet de détection (144).
